# EUROPÄISCHE PATENTANMELDUNG

(11) **EP 2 192 095 A1**
(43) Veröffentlichungstag der Anmeldung: **02.06.2010**
(21) Anmeldenummer: 08405295.0
(22) Anmeldetag: 01.12.2008
(51) Int. Cl.: C04B 28/02, C04B 18/10

(54) **Hydraulische Bindemittelmischung und Herstellverfahren**

(71) Anmelder: Eberhard Recycling AG, 8302 Kloten (CH)
(72) Erfinder: Eberhard, Heinrich, 8152 Opfikon (CH)
(74) Vertreter: Wiedmer, Edwin

(57) **Zusammenfassung**

Eine hydraulische Bindemittelmischung enthält calcinierte feinkörnige mineralische Rückstände aus Kies- und Bodenwaschanlagen oder Bauschutt-Recyclinganlagen und Portlandzement. Durch den Portlandzement aktivierte Mineralphasen der Calcinate liefern einen hohen Festigkeitsbeitrag, und die Mörteldruckfestigkeit der Bindemittelmischung ist mit der Festigkeit des verwendeten Portlandzements vergleichbar.

## Beschreibung

### TECHNISCHES GEBIET

Die vorliegende Erfindung betrifft eine hydraulische Bindemittelmischung und ein Verfahren zu deren Herstellung.

### STAND DER TECHNIK

Zur Reinigung kontaminierter Böden hat sich die Bodenwäsche als ein wirksames und ökologisches Verfahren bewährt, mit dem insbesondere nicht bindige, grobkörnige Böden wirtschaftlich aufbereitet werden können. Die erste Verfahrensstufe ist ein Nassaufschluss des Bodenmaterials, wobei durch Anmaischen mit Wasser und Einbringen mechanischer Rührenergie eine weitestgehende Auflösung aller Bodenaggregate angestrebt wird. In nachfolgenden Klassier- und Sortierapparaten werden die Bodenbestandteile nach Komgrössen fraktioniert. Dabei wird der Grobkornanteil grösser 0.06 Millimeter als schadstofffreie, verwertbare Kiessande abgetrennt, wohingegen die Schadstoffe in der Feinkornfraktion aufkonzentriert werden. Die kontaminierte Feinkornfraktion wird entweder deponiert oder in Zementwerken als Rohmehlersatz eingesetzt.

Die Gewinnung von hochwertigem Sand und Kies erfolgt mit Nassverfahren, bei denen die im Rohkies enthaltenen Verunreinigungen wie Lehm und Schluff mit Wasser abgetrennt werden. Der dabei entstehende Kiesschlamm wird in zunehmendem Masse im Kieswerk in Filterpressen entwässert. Dadurch kann der Restwassergehalt des Kiesschlamms bis auf 20 bis 28 Gew.-% reduziert werden, wodurch dieser stichfest und seine Entsorgung auf der Deponie oder im Zementwerk möglich wird. Je nach Verlehmungsgrad des Kiesvorkommens kann die anfallende Kiesschlammmenge stark variieren, von 2 bis 5 Gew.-% für sauberen Kies und bis zu 30 bis 40 Gew.-% für stark verlehmte Schotter oder kieshaltige Moränen.

Mineralischer Bauschutt und Strassenaufbruch werden in Baustoffrecyclinganlagen mit einem trockenen Aufbereitungsverfahren zu Recycling-Gesteinskörnungen aufbereitet, die im Strassen- und Tiefbau sowie für die Betonherstellung eingesetzt werden. Die Bauabfälle werden zuerst zerkleinert und dann mit Siebmaschinen in Korngruppen fraktioniert. Leichtgewichtige Verunreinigungen werden mit einer Windsichtung aus den einzelnen Korngruppen abgetrennt, damit diese den jeweiligen Anforderungen an verwendbare Gesteinskörnungen entsprechen. Dieses Reinigungsverfahren ist jedoch nur für Korngrössen oberhalb 8 mm anwendbar. Daher fallen insbesondere bei der Aufbereitung von gemischten Bauabfällen Gesteinskörnungen der Grössenklasse 0-8 mm an, mit zu hohen Anteilen an Fremdbestandteilen, für die es keine Verwertungsmöglichkeiten gibt.

Bei allen drei vorstehend genannten industriellen Aufbreitungsprozessen fallen feinkörnige Rückstände an, die ein beträchtliches Abfallvolumen mit entsprechenden Entsorgungsproblemen darstellen.

CH 495 299 und CH 544 727 offenbaren ein Verfahren, bei dem aus natürlichen Mergeln, Kieselkalken oder Kieswaschschlämmen durch thermische Behandlung ein hydraulisch aktiver Stoff hergestellt wird. Die thermische Behandlung erfolgt in einem im Vergleich zu anderen Brennprozessen relativ niedrigen Temperaturbereich zwischen 700 und 1100°C und mit einer Brennzeit bis zu einer Stunde. Bereits bei diesen Temperaturen bilden sich aus den in den Ausgangsmaterialien vorhandenen tonigen Bestandteilen als auch aus den Kieselsäuren und aus dem Calcit Zersetzungsprodukte, deren Reaktionsfähigkeit mit Wasser jedoch nur ausreicht, um damit Bauelemente zu formen. Ihre hohe Endfestigkeit erreichen diese Bauelemente nach einer hydrothermalen Härtung mit Sattdampf in einem Autoklaven.

Aus DE 196 41 583 A1 ist ein Verfahren zur Herstellung von hydraulisch aktiven Mineralphasen aus Betonabfällen bekannt. Hierbei wird der Betonabbruch zunächst auf 300 bis 800°C aufgeheizt. Diese Temperaturen bewirken eine Neubildung von Mineralphasen und damit einhergehende Spannungen und Risse entlang der Korngrenzen, die dazu führen, dass der Beton bei der anschliessenden Zerkleinerung hauptsächlich an den Materialgrenzen bricht. Dadurch ergibt sich die Möglichkeit, die Gesteinskörnung vom Zementstein abzutrennen. Die aufkonzentrierte und dehydratisierte Zementsteinfraktion wird nachfolgend bei Temperaturen im Bereich von 800 bis 1450°C gebrannt. Das Endprodukt ist ein hydraulisch aktiver Stoff, der als Bindemittel zur Betonherstellung geeignet ist.

Aus DE 10 2006 049 836 A1 ist ebenfalls ein Verfahren zur Herstellung eines hydraulischen Bindemittels aus Baureststoffen, insbesondere Abbruchbeton, bekannt, bei dem der Aufbereitungsprozess zur Abtrennung der Gesteinkörnung vor der thermischen Behandlung erfolgt. Mit den Aufbereitungsstufen Zerkleinern, Sieben und Sichten wird der Zementstein in der Kornfraktion kleiner 0.063 mm angereichert. Anschliessend wird die Zementsteinfraktion bei 600 bis 800°C über einen Zeitraum von 0.25 bis zu 10 Stunden calciniert. Dabei entstehen hydraulisch aktive Mineralphasen, die als Bindemittel zur Betonherstellung geeignet sind.

Die bekannten Verfahren zur Herstellung eines hydraulischen Recycling-Bindemittels aus den feinkörnigen mineralischen Rückständen der Kieswäsche und des Baustoffrecyclings haben wesentliche Nachteile. Es hat sich herausgestellt, dass die mit diesen Verfahren hergestellten Bindemittel sehr geringe Druckfestigkeiten haben. Beispielsweise erreicht ein Mörtel, für den als Bindemittel ein bei 850°C geglühtes Feinkorn aus der Bodenwäsche verwendet wurde, nur eine Druckfestigkeit von 3.4 N/mm². Bindemittel mit derart geringer Festigkeit sind jedoch zur Herstellung von hochwertigem Beton, der beispielsweise als Konstruktionsbeton eingesetzt werden kann, ungeeignet. In DE 10 2006 049 836 A1 ist daher nur eine Verwendung des Recycling-Bindenmittels zur Herstellung von Betonen mit geringer Festigkeit genannt, die im Strassen- und Wegebau für Randsteineinfassungen und zur Hohlraumverfüllung eingesetzt werden. In CH 544 727 wird zur Steigerung der Festigkeit eine hydrothermale Härtung im Autoklaven vorgenommen. Dadurch ist jedoch der Einsatzbereich der Recycling-Bindemittel auf im Autoklaven gehärtete Formsteine begrenzt, wobei diese Vorgehensweise zudem mit einem grossen energetischen und apparatetechnischen Aufwand verbunden ist.

Das aus DE 196 41 583 A1 bekannte zweistufige thermische Verfahren führt zwar zu hydraulischen Bindemitteln mit höherer Festigkeit, der dafür nötige Energieeinsatz ist jedoch höher als bei der konventionellen Zementklinkerherstellung. Denn aufgrund der Vorwärmung des Ausgangsmaterials auf 600 bis 800°C mit anschliessender Zerkleinerung und Anreichung des dehydratisierten Zementsteins wird eine Materialabkühlung in Kauf genommen, bevor der endgültige Brennprozess bei Temperaturen, die auch bei der Zementklinkerherstellung herrschen, durchgeführt wird.

### DARSTELLUNG DER ERFINDUNG

Der Erfindung liegt die Aufgabe zugrunde, feinkörnige Rückstände aus der Boden- und Kieswäsche sowie Bauschuttgranulate als hydraulische Bindemittel wieder zu verwenden, wobei der dazu notwendige Energieeinsatz minimiert wird und zugleich damit Betone mit hohen Festigkeiten hergestellt werden können.

Zur erfindungsgemässen Lösung der Aufgabe führt eine hydraulische Bindemittelmischung enthaltend calcinierte feinkörnige mineralische Rückstände aus Kies- und Bodenwaschanlagen oder Bauschutt-Recyclinganlagen und Portlandzement.

Der Anteil an calcinierten feinkörnigen mineralischen Rückständen beträgt bevorzugt 10 bis 70 Gew.-%. Eine Bindemittelmischung bestehend aus bis zu 70 Gew.-% Recycling-Bindemittel und wenigstens 30 Gew.-% Portlandzement erreicht noch die Festigkeitsklasse des in der Mischung eingesetzten Portlandzements.

Die feinkörnigen mineralischen Rückstände weisen bevorzugt ein CaO/SiO₂-Verhältnis von 0.3 bis 0.7 auf.

Die Feinkornfraktionen werden bevorzugt bei einer Temperatur von 700 bis 1000°C, insbesondere 800 bis 900°C, calciniert und dann in einer Bindemittelmischung mit Portlandzement eingesetzt. Es hat sich herausgestellt, dass Portlandzement die Mineralphasen der Calcinate in geeigneter Weise aktivieren kann, so dass diese einen hohen Festigkeitsbeitrag liefern können, und die Mörteldruckfestigkeit der Bindemittelmischung mit der Festigkeit des verwendeten Portlandzements vergleichbar ist.

Weitere Ausführungsbeispiele sind in den abhängigen Ansprüchen beschrieben.

### BESCHREIBUNG BEVORZUGTER AUSFÜHRUNGSFORMEN

Die Rückstände aus der Kies- und Bodenwäsche sind sehr feinkörnige und homogene Mineralgemische mit einer Körnung kleiner als 0.06 Millimeter. Sie bestehen aus feinverteilten Silikaten (Quarz, Feldspäte), Carbonaten (Calcit, Dolomit) und Tonmineralen (Glimmer, Illit und Kaolinit). Im Vergleich zu den Waschschlämmen sind Bauschuttgranulate kalkreicher und haben geringere Anteile an Tonmineralen. Das CaO/SiO₂-Verhältnis all dieser Materialien liegt im Bereich von 0.3 bis 0.7. Die mineralogische Zusammensetzung der feinkörnigen Rückstände aus der Kies- und Bodenwäsche und aus dem Baustoffrecycling unterscheidet sich wesentlich von der eines Rohmehls zur Zementherstellung, das auf ein CaO/SiO₂-Verhältnis von 3 fein abgestimmt wird. Aufgrund des viel zu geringen Calcitgehaltes kann aus den feinkörnigen Rückständen kein Zementklinker hergestellt werden.

In Übereinstimmung mit dem Stand der Technik hat sich gezeigt, dass beim Erhitzen (Calcinierung) der genannten Ausgangsmaterialien Zersetzungen und Neubildungen von Mineralphasen stattfinden. Im Temperaturbereich zwischen 400 und 1000°C geben Tonminerale sowohl ihr Zwischenschichtwasser als auch das chemisch in Form von Hydroxidgruppen gebundene Wasser ab. Die derart dehydrierten Tonminerale zerfallen entweder in amorphe, reaktionsfähige Kieselsäuren, oder es kommt zu Phasenneubildungen. Aus Quarz bildet sich reaktionsfähiges Siliciumdioxid, und aus Calcit wird CO₂ abgespalten, wobei CaO entsteht.

Die Calcinierung wird bevorzugt in einem direkt beheizten Drehrohrofen durchgeführt. Die Betriebsweise und die Dimensionierung des Rohres werden so gewählt, dass die Verweilzeit des Feststoffes im heissen Bereich des Ofens etwa 30 Minuten beträgt. Das Calcinat wird nach Abkühlung in einer Kugelmühle bis auf eine Korngrösse kleiner 10 µm gemahlen. Es hat sich gezeigt, dass die gemahlenen Calcinate nach Anmachen mit Wasser nur ein geringes eigenes Erhärtungsvermögen haben. Überraschenderweise hat sich aber herausgestellt, dass die Calcinate in einer Mischung mit Portlandzement festigkeitsbildende Eigenschaften zeigen. Portlandzement wirkt als ein Aktivator, der es möglich macht, dass sich aus den Calcinaten erhärtungsfähige Hydratationsprodukte bilden können. Es hat sich des Weiteren herausgestellt, dass besonders reaktionsfähige Calcinate unterhalb der Bildung einer Glas- bzw. Schmelzphase, d.h. im Bereich zwischen 800 bis 900°C, vorzugsweise bei 850°C, entstehen. Bei tieferen und auch bei höheren Calciniertemperaturen sind die entstehenden Mineralphasen deutlich weniger reaktiv und liefern einen geringeren Festigkeitsbeitrag.

Als Mass für die Reaktionsfähigkeit der hergestellten Calcinate wurde der Beitrag zur Mörtelfestigkeit im Vergleich zum Festigkeitsbeitrag eines inerten Stoffes erfasst. Die Druckfestigkeiten der Normmörtel mit 30% Calcinat-Anteil im Bindemittel waren 8-10 MPa höher als der Referenzmörtel mit 30% inertem Quarzmehl. Dies entspricht einer Festigkeitszunahme von 30 bis 37%, die auf die chemische Reaktionsfähigkeit der Calcinate zurückgeführt werden kann. Es hat sich ferner gezeigt, dass in einer Mischung mit 60 Gew.-% Calcinat die Festigkeitsklasse des verwendeten Portlandzements noch erreicht wird. Bei einem Calcinatanteil von mehr als 70 Gew.-% in der Bindemittelmischung fällt die Druckfestigkeit stark ab und liegt bei 100 Gew.-% Calcinat nur noch bei 3.4 N/mm².

### Beispiel

In einer Bodenwaschanlage fällt ein Filterkuchen mit einem Wassergehalt von 20% und einer Korngrösse kleiner 0.06 mm an. Der Filterkuchen hat folgende chemische Zusammensetzung:

| | |
|---|---|
| SiO₂ | 45.3 Masse-% |
| AI₂0₃ | 8.9 Masse-% |
| Fe₂0₃ | 3.8 Masse-% |
| K₂0 | 1.5 Masse-% |
| Na₂0 | 0.8 Masse-% |
| CaO | 15.8 Masse-% |
| MgO | 4.3 Masse-% |
| Glühverlust | 18.7 Masse-% |

Der Filterkuchen wird bei 105°C getrocknet und dann in einem Labor-Drehrohrofen bei 850°C calciniert. Das Drehrohr des Ofens hat eine Länge von 1160 mm und einem Innendurchmesser von 70 mm und kann auf einer Länge von 550 mm beheizt werden. Drehzahl und Neigung des Rohres werden so eingestellt, dass die Verweilzeit in der heissen Zone des Ofens 30 Minuten beträgt. Das calcinierte Gut wird anschliessend in einer Kugelmühle 30 Minuten gemahlen. Das gemahlene Calcinat wird mit Portlandzement gemischt. Die Mischungszusammensetzung ist 60 Gew.-% Calcinat und 40 Gew.-% Portlandzement CEM I 42.5 N. Diese Bindemittelmischung wird mit Normsand zu Normmörtel nach DIN EN 196-1 verarbeitet. Mit dem Mörtel werden Prüfkörper mit den Abmessungen 40 mm x 40 mm x 160 mm geformt. Mit einer Form kann ein Satz von drei Prüffkörpern hergestellt werden. Nach 28 Tagen Lagerung im Wasserbad wird eine Prüfung der Druckfestigkeit durchgeführt. Die Druckfestigkeitsprüfung wird jeweils an den in zwei Hälften gebrochenen Prüfkörpern vorgenommen. Das arithmetische Mittel aus sechs Einzelergebnissen der nach diesem Beispiel hergestellten Prüfkörper beträgt 42.6 N/mm².

Eine Bindemittelmischung aus Calcinat und Portlandzement CEM I 42.5 N mit dem vorstehend genannten Mischungsverhältnis erreicht somit immer noch die Druckfestigkeitsanforderung des reinen CEM I 42.5 N nach DIN EN 196-1.

## Patentansprüche

1. Hydraulische Bindemittelmischung enthaltend calcinierte feinkörnige mineralische Rückstände aus Kies- und Bodenwaschanlagen oder Bauschutt-Recyclinganlagen und Portlandzement.

2. Hydraulische Bindemittelmischung nach Anspruch 1, **dadurch gekennzeichnet, dass** der Anteil an calcinierten feinkörnigen mineralischen Rückständen 10 bis 70 Gew.-% beträgt.

3. Hydraulische Bindemittelmischung nach Anspruch 1, **dadurch gekennzeichnet, dass** die feinkörnigen mineralischen Rückstände eine Körnung kleiner 0.06 mm aufweisen.

4. Hydraulische Bindemittelmischung nach Anspruch 1, **dadurch gekennzeichnet, dass** die feinkörnigen mineralischen Rückstände ein CaO/SiO₂-Verhältnis von 0.3 bis 0.7 aufweisen.

5. Verfahren zur Herstellung einer hydraulischen Bindemittelmischung gemäss Anspruch 1, **gekennzeichnet durch** die Schritte
- Calcinieren von feinkörnigen mineralischen Rückständen aus Kies- und Bodenwaschanlagen oder Bauschutt-Recyclinganlagen bei einer Temperatur von 700 bis 1000°C, vorzugsweise 800 bis 900°C;
- Mischen der calcinierten feinkörnigen mineralischen Rückstände mit Portlandzement.

6. Verfahren nach Anspruch 5, **dadurch gekennzeichnet, dass** der Anteil an calcinierten feinkörnigen mineralischen Rückständen 10 bis 70 Gew.-% der Mischung beträgt.

7. Verfahren nach Anspruch 5, **dadurch gekennzeichnet, dass** die feinkörnigen mineralischen Rückstände ein CaO/SiO₂-Verhältnis von 0.3 bis 0.7 aufweisen.

8. Verfahren nach Anspruch 5, **dadurch gekennzeichnet, dass** die calcinierten feinkörnigen mineralischen Rückstände auf eine Korngrösse kleiner 10µm gemahlen werden.

9. Verfahren nach Anspruch 5, **dadurch gekennzeichnet, dass** die feinkörnigen mineralischen Rückstände in einem Drehrohrofen calciniert werden.

10. Verfahren nach Anspruch 9, **dadurch gekennzeichnet, dass** die Verweilzeit der feinkörnigen mineralischen Rückstände im heissen Bereich des Ofens 20 bis 40 Minuten, insbesondere etwa 30 Minuten, beträgt.
